# EUROPÄISCHE PATENTSCHRIFT

(11) **EP 2 631 203 B1**
(45) Veröffentlichungstag und Bekanntmachung des Hinweises auf die Patenterteilung: **02.07.2014**
(21) Anmeldenummer: 12170405.0
(22) Anmeldetag: 01.06.2012
(51) Int. Cl.: B65G 19/28

(54) **Baukastenartig aufgebauter Kettenkratzerförderer**
Modular scraper chain conveyor
Convoyeur à chaîne à raclettes du type modulaire

(30) Priorität: 24.02.2012 DE 102012101487
(43) Veröffentlichungstag der Anmeldung: 28.08.2013
(73) Patentinhaber: Niederholz GmbH, 46519 Alpen (DE)
(72) Erfinder: Cassone, Angelo, 45661 Recklinghausen (DE); Dünnwald, Wilfried, 47475 Kamp-Lintfort (DE); Niederholz, Ulrich, 47475 Kamp-Lintfort (DE)
(74) Vertreter: Müller, Karl-Ernst

(56) Entgegenhaltungen:
- DE-A1- 10 203 302
- DE-A1-102006 001 561

## Beschreibung

Die Erfindung betrifft einen Kettenkratzerförderer bestehend aus einer Vielzahl von hintereinander angeordneten, im Querschnitt U-förmig mit einem Boden und zwei davon aufstehenden Seitenwänden ausgebildeten Rinnensegmenten und aus in die Rinnensegmente jeweils eingesetzten Fördererschüssen, die jeweils baukastenartig aus vier leistenartig mit einer einheitlichen Gestalt ausgebildeten, längs der Seitenwände eines Rinnensegments verlaufenden und zwei übereinander liegende Führungskanäle ausbildenden Profilteilen und aus einem diese derart verbindenden Kratzblech bestehen, dass oberhalb und unterhalb des Kratzblechs jeweils ein Obertrum und ein Untertrum für quer zur Laufrichtung angeordnete Kratzleisten und diese in Laufrichtung verbindende Fördererketten gebildet ist, wobei zwei untere auf dem Boden der Rinnensegmente aufliegende Profilteile das Kratzblech tragen und zwei obere Profilteile auf das Kratzblech aufgelegt sind, so dass das Kratzblech zwischen den oberen und den unteren Profilteilen fixiert ist, und wobei in den Seitenwänden der Rinnensegmente jeweils die oberen Profilteile niederhaltende Halter festgelegt sind.

Ein Kettenkratzerförderer mit den vorgenannten Merkmalen ist in der DE 10 2007 014 368 A1 beschrieben. Soweit sich der bekannte Kettenkratzerförderer bereits durch einen baukastenartigen Aufbau mit einzelnen, in die trogförmigen Rinnensegmente jeweils paarweise übereinander liegend eingesetzten Profilteilen und einem zwischen den jeweils oberen und unteren Profilteilen eingelegten Bodenblech auszeichnet, sind die einzelnen Profilteile mit ein endseitig angebrachtes Gewinde aufweisenden Schweißbolzen versehen, so dass nach dem Durchstecken der Schweißbolzen durch in den Seitenwänden der Rinnensegmente ausgebildete Öffnungen mittels zugeordneter Unterlegscheiben und auf die Schweißbolzen aufgeschraubter Fixierungsmuttern eine feste Verbindung zwischen jedem Profilteil und der daran anliegenden Seitenwand herstellbar ist. Zusätzlich ist oberhalb der oberen Profilteile jeweils ein auf diesen aufliegender Niederhalter in einer gleichen Weise mit der Seitenwand verschraubt. Zur Fixierung des zwischen den Profilteilen liegenden Bodenblechs, welches zweiteilig mit dem eigentlichen Kratzblech und einem dieses tragenden Tragblech ausgebildet ist, sind an den Seitenwänden der Rinnensegmente Zentriernocken angebracht, die in entsprechend an Kratzblech und Tragblech ausgebildete Ausnehmungen eingreifen und für eine Festlegung von Kratzblech und Tragblech in Längsrichtung der Rinnensegmente sorgen.

Soweit demnach aufgrund des baukastenartigen Aufbaus der Fördererschüsse der Reparaturaufwand für die Rinnensegmente des Kettenkratzerförderers grundsätzlich verringert ist, weil die Einzelteile der Fördererschüsse jeweils demontierbar bzw. montierbar sind und somit einzeln ausgetauscht werden können, ist mit dem bekannten Kettenkratzerförderer insbesondere noch der Nachteil einer Schweiß- und Schraubverbindung der Einzelteile untereinander verbunden. So ist insbesondere bei dem Einsatz von besonders verschleißfesten Werkstoffen eine Schweißung schwierig durchzuführen bzw. aus Werkstoffgründen unmöglich, so dass aus Gründen einer langen Standzeit des Kettenkratzerförderers wünschenswerte Werkstoffe nicht zur Anwendung gelangen können. Soweit der bekannte Kettenkratzerförderer darüber hinaus Schraubverbindungen aufweist, ist die Herstellung der entsprechenden Gewinde bei besonders verschleißfesten Werkstoffen ebenfalls aufwendig und schwierig. Außerdem setzt die Anordnung von Schraubverbindungen eine entsprechende passgenaue Zuordnung der miteinander zu verschraubenden Teile voraus, und eine derartige Passgenauigkeit ist insbesondere bei einer untertägigen Montage bzw. Demontage vor Ort nicht gegeben bzw. einzuhalten.

Ein weiterer Nachteil der verwendeten Schraubverbindungen besteht darin, dass eine Demontage der mit den Seitenwänden verschraubten Profilteile insbesondere nach einer längeren Einsatzzeit in der Regel nur mittels Aufsprengen der ursprünglich aufgeschraubten Befestigungsmuttern möglich sein wird, womit in der Regel auch eine Beschädigung des an den Profilteilen angebrachten Gewindes verbunden ist. Somit sind diese Profilteile nicht mehr für eine neue Verwendung geeignet und müssen selbst repariert bzw. erneuert werden. Insofern ist der Reparaturaufwand für einen derartigen bekannten Kettenkratzerförderer in der Praxis beträchtlich.

Der Erfindung liegt daher die Aufgabe zugrunde, einen Kettenkratzerförderer der eingangs genannten Art so weiterzubilden und einzurichten, dass Schweiß- und Schraubverbindungen zum Zusammenfügen von dessen Bauteilen vermieden sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die als Gussteile ausgebildeten Profilteile jeweils an ihren den Führungskanal zwischen sich einschließenden oberen und unteren Stegen angegossene Ansätze aufweisen und in dem Boden der Rinnensegmente jeweils Ausnehmungen zur Aufnahme der an den unteren Stegen der auf den Boden aufgesetzten Profilteile befindlichen Ansätze ausgebildet sind und die an den gegenüberliegenden oberen Stegen der Profilteile befindlichen Ansätze in zugeordnete, in dem auf die Profilteile aufgelegten Kratzblech ausgebildete Ausnehmungen eingreifen und dadurch das Kratzblech zwischen den übereinander liegenden Profilteilen festlegen, und dass die auf das Kratzblech gegenüber den unteren Profilteilen um 180 Grad gewendet aufgelegten oberen Profilteile mit den an ihren Stegen ausgebildeten Ansätzen in die in dem Kratzblech angeordneten Ausnehmungen eingreifen und mit ihren an den oberen Stegen ausgebildeten Ansätzen von an den Seitenwänden der Rinnensegmente lösbar festgelegten Haltern mittels Eingriff in in den Haltern ausgebildete Ausnehmungen übergriffen sind.

Mit der Erfindung ist der Vorteil verbunden, dass an den Profilteilen zusätzlich lediglich deren Ansätze auszubilden sind, die aufgrund der erfindungsgemäßen Ausbildung der Profilteile als Gussteile in einem Arbeitsgang mit angegossen werden können. Insofern ist auch keine Rücksicht auf die Schweißtechnik zur Verbindung einzelner Bauteile zu nehmen, so dass keine Restriktionen bezüglich der einzusetzenden Werkstoffe mehr gelten. Da die mit einer einheitlichen Gestalt abgegossenen Profilteile für deren Einsatz im Untertrum und im Obertrum des Kettenkratzerförderers jeweils nur um 180 Grad gedreht in die trogartigen Rinnensegmente einzusetzen sind, ist eine einfache Montage und Demontage der Profilteile ohne das Erfordernis von Verbindungen mit den Seitenwänden der Rinnensegmente möglich. Entsprechendes gilt auch für das zwischen den Profilteilen angeordnete Kratzblech, welches formschlüssig an den unteren Profilteilen festgelegt und ebenso von den oberen Profilteilen fixiert ist. Die oberen Profilteile sind ihrerseits unter Anwendung des gleichen Fixierungsprinzips von den an den Seitenwänden festgelegten Haltern festgelegt. Insofern ist in vorteilhafter Weise auf die Anbringung jeglicher Bauteile an den Seitenwänden verzichtet.

Ein weiterer bedeutsamer Vorteil besteht darin, dass die erfindungsgemäße Ausgestaltung des Kettenkratzerförderers insbesondere eine werkzeuglose Montage und auch Demontage der Einzelteile wie Profilteile und Kratzblech in und aus den Rinnensegmenten ermöglicht. Damit eignet sich ein erfindungsgemäß ausgestalteter Kettenkratzerförderer insbesondere für mit einer einfach gehaltenen bzw. ausgelegten Ausrüstung versehene Förderbetriebe in Steinkohlenbergwerken.

Nach einem Ausführungsbeispiel der Erfindung ist in an sich aus der gattungsbildenden DE 10 2007 014 368 A1 bekannter Weise vorgesehen, dass zur Stützung des Kratzbleches in dem Rinnenprofil ein gesondertes Tragblech vorgesehen und mit an ihm ausgebildeten Ausnehmungen auf die Ansätze der auf den Boden der Rinnensegmente aufgelegten Profilteile aufgelegt ist und das Kratzblech seinerseits von dem an den unteren Profilteilen fixierten Tragblech getragen ist. Mit der Aufteilung der Tragkonstruktion für die Mitnehmer und das von dem Kettenkratzerförderer zu fördernde Haufwerk in ein Tragblech und in ein Kratzblech ist der Vorteil verbunden, dass beide Bleche aus unterschiedlichen Materialien hergestellt sein können. So kann das Kratzblech aus einem verschleißfesteren Material ausgebildet sein als das Tragblech, welches nicht in Kontakt mit sich darauf bewegenden Teilen steht. Ein weiterer Vorteil besteht darin, dass bei einem aufgetretenen Verschleiß lediglich das Kratzblech ausgewechselt werden muss. Da beide Bleche, insbesondere auch das Kratzblech, lediglich zwischen die jeweils angeordneten Profilteile eingelegt und lagemäßig daran fixiert sind, ist auch eine leichte Handhabung bei der entsprechenden Auswechslung gegeben.

Soweit zur Fixierung der baukastenartig in die Rinnensegmente eingesetzten Bestandteile des Kettenkratzerförderers jeweils ein an einer Seitenwand festzulegender Halter vorgesehen ist, kann nach einem Ausführungsbeispiel der Erfindung jeder Halter zu seiner Festlegung an der Seitenwand des Rinnensegmentes mit einem Vorsprung eine in der Seitenwand ausgebildete Durchbrechung durchgreifen und in dem über die Seitenwand hervorstehenden Bereich des Vorsprungs mit einer Öffnung zur Aufnahme eines einsteckbaren Sicherungskeils ausgebildet sein. Auch hiermit ist eine einfache Handhabung des Kettenkratzerförderers bei Montage wie auch Demontage verbunden.

Zur Verbindung der einzelnen Rinnenschüsse miteinander kann erfindungsgemäß vorgesehen sein, dass das Kratzblech an seinen zwischen den Seitenwänden des Rinnensegments ausgerichteten Querkanten einerseits mit einem über das zugeordnete Rinnensegment hervorstehenden Überlappungsvorsprung und andererseits mit einem zum Eingriff des an dem in dem nachfolgenden Rinnensegment fixierten Kratzblech befindlichen Überlappungsvorsprunges vorgesehenen Überlappungsrücksprung versehen ist, so daß im Bereich der aneinanderstoßenden Rinnensegmente jeweils ein spaltloser Übergang verwirklicht ist.

In der Zeichnung ist ein Ausführungsbeispiel der Erfindung wiedergegeben, welches nachstehend beschrieben ist. Es zeigen:
- Fig. 1: Ein Rinnensegment eines Kettenkratzerförderers mit einem darin eingesetzten Fördererschuss in einer schematischen Querschnittsansicht,
- Fig. 2: ein Profilteil als Bauteil des Fördererschusses in einer Seitenansicht,
- Fig. 3: das Profilteil gemäß Figur 2 in Vorderansicht,
- Fig. 4: ein Tragblech eines Fördererschusses in einer Draufsicht,
- Fig. 5: ein Kratzblech eines Fördererschusses in einer Draufsicht,
- Fig. 6: das Rinnensegment gemäß Figur 1 mit eingesetztem Fördererschuss in einer Seitenansicht
- Fig. 7: den Gegenstand der Figur 1 bzw. Figur 6 in einer Draufsicht.

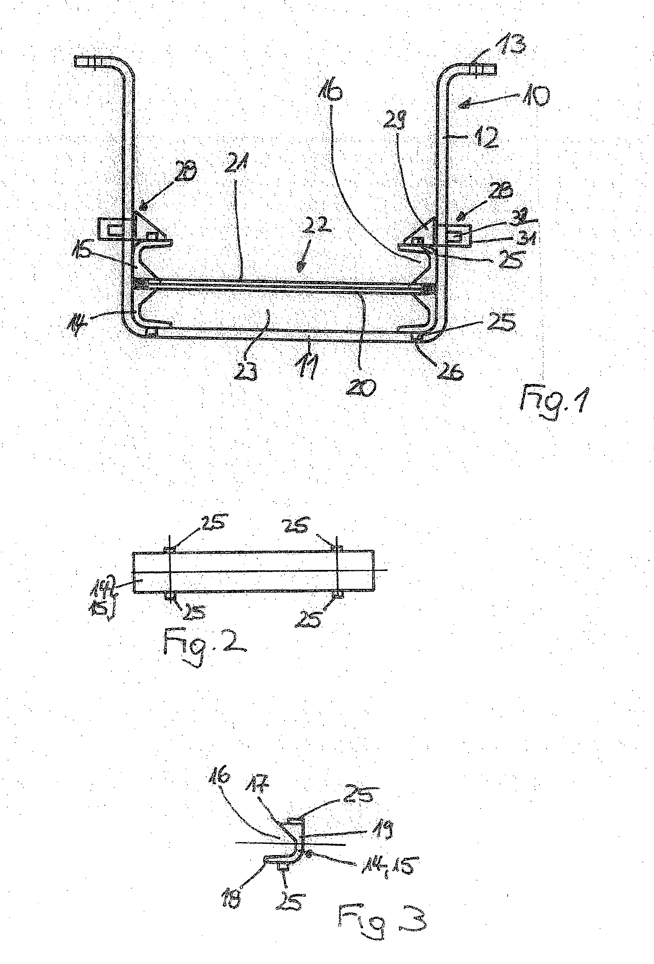

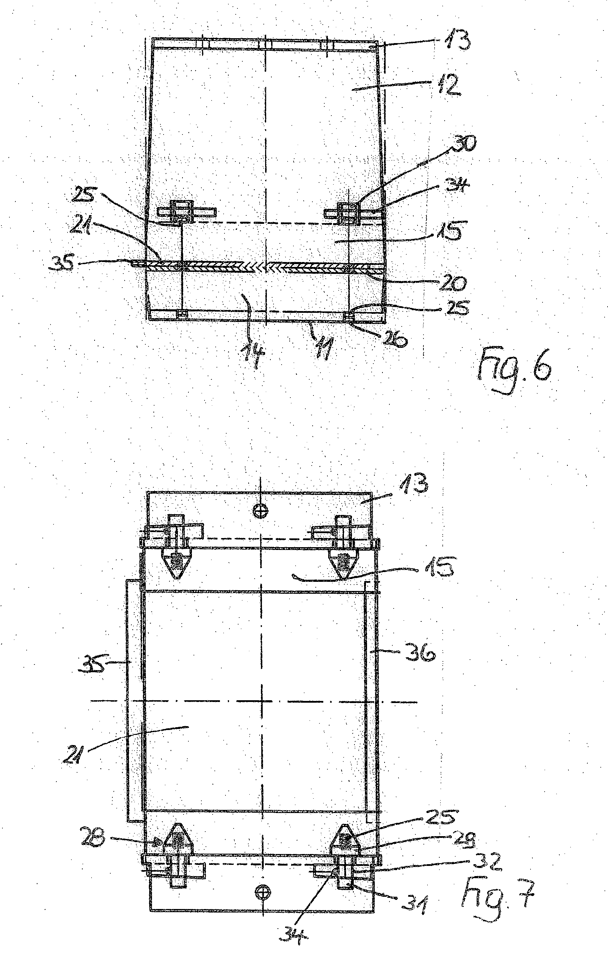

Das sich aus den Figuren 1 bzw. 6 und 7 ergebende Rinnensegment 10 ist als im Wesentlichen U-förmiges, einteiliges Stahlprofil ausgebildet, bestehend aus einem ebenen Boden 11, aus zwei von diesem hochgebogenen, senkrechten Seitenwänden 12 und aus von den Seitenwänden 12 obenseitig nach außen am umgebogenen Randstegen 13.

Ein in das Innere des Rinnensegmentes 10 eingesetzter Fördererschuss besteht zunächst aus zwei bodenseitig in das Rinnensegment eingesetzten Profilteilen 14, die jedes ein halbes ∑-Profil mit einem darin ausgebildeten Führungskanal 16 ausbilden. Auf die bodenseitigen unteren Profilteile 14 ist zunächst ein Tragblech 20 aufgelegt, auf welches wiederum ein Kratzblech 21 aufgelegt ist. Auf das Kratzblech 21 sind alsdann obere, wiederum ein halbes ∑-Profil ausbildende Profilteile 15 in einer Flucht mit den unteren Profilteilen 14 aufgelegt, so dass sich oberhalb und unterhalb von Tragblech 20 bzw. Kratzblech 21 ein Obertrum 22 und ein Untertrum 23 ergibt, in welchen die hier nicht weiter dargestellten Fördererketten und Kratzleisten umlaufend geführt sind.

Wie sich aus den Figuren 2 und 3 im Einzelnen entnehmen lässt, weist jedes für sich ein halbes ∑-Profil ausbildende Profilteil 14, 15 einen oberen Steg 17, einen unteren Steg 18 und einen diese seitlich verbindenden Verbindungssteg 19 auf, so daß die Stege gemeinsam den einseitig seitlich offenen Führungskanal 16 der Profilteile 14, 15 ausbilden. Die Profilteile 14 und 15 weisen insoweit eine einheitliche Gestalt auf, und zu deren im Einzelnen noch zu beschreibender Fixierung in den Rinnensegmenten 10 sind an den oberen Stegen 17 wie auch an den unteren Stegen 18 der Profilteile 14, 15 jeweils davon abragende Ansätze 25 angeordnet, vorzugsweise jeweils ein Ansatz 25 in den beiden äußeren Endbereichen der Profilteile.

Zur Fixierung der Profilteile 14, 15 in den Rinnensegmenten 10 sind in einer entsprechend passenden Zuordnung in dem Boden 11 Ausnehmungen 26 angeordnet, in die die an den unteren Stegen 18 der auf den Boden 11 aufgesetzten unteren Profilteile 14 befindlichen Ansätze 25 eingreifen, so daß die unteren Profilteile 14 lagemäßig in dem zugeordneten Rinnensegment 10 fixiert sind.

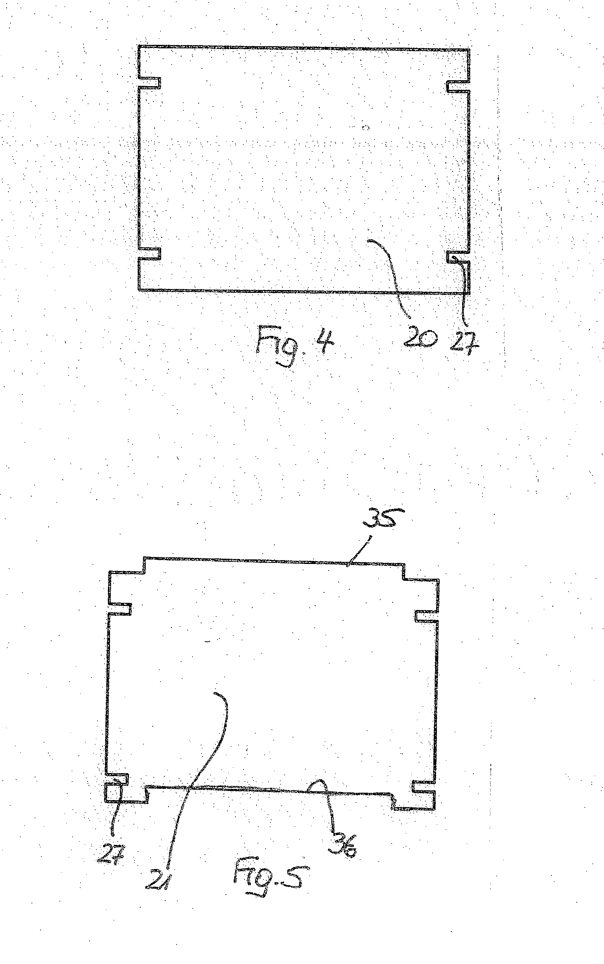

Auf die unteren Profilteile 14 ist das in Figuren 4 und 5 jeweils einzeln dargestellte Tragblech 20 und Kratzblech 21 aufgelegt, wobei die an dem oberen Steg 17 der Profilteile 14 befindlichen Ansätze 25 in die Ausnehmungen 27 des Tragblechcs 20 eingreifen. In gleicher Weise greifen die an dem Steg 17 der auf das Kratzblech 21 gegenüber den unteren Profilteilen 14 um 180 Grad gewendet aufgelegten oberen Profilteile 15 befindlichen Ansätze 25 ein, so dass Tragblech 20 und Kratzblech 21 zwischen den beiden Profilteilen 14 und 15 lagemäßig fixiert sind.

Zur Festlegung der oberen Profilteile 15 in dem Rinnensegment 10 sind aus den Figuren 1 sowie 6 und 7 ersichtliche Halter 28 vorgesehen, die L-förmig ausgestaltet sind mit einem auf dem jeweiligen oberen Profilteil 15 aufliegenden Schenkel 29, in dem jeweils Ausnehmungen 30 zur Aufnahme der auf dem Steg 18 des oberen Profilteils 15 ausgebildeten Ansätze 25 angeordnet sind. Jeder Halter 28 durchgreift ferner mit einem Vorsprung 31 eine Durchbrechung 33 der Seitenwand 12, wobei der Vorsprung 31 in seinem nach außen über die Seitenwand 12 überstehenden Bereich eine Öffnung 32 zum Einschlagen eines vorzugsweise keilförmigen Sicherungskeils 34 aufweist.

Wie sich aus den Figuren 5 bis 7 ergibt, weist das Kratzblech 21 im Hinblick auf die Herstellung einer Überlappung mit dem Kratzblech des jeweils anschließenden Fördererschusses eine besondere Gestaltung auf, die einerseits aus einem in Förderrichtung über die Abmessung des Rinnensegmentes 10 überstehenden Überlappungsvorsprung 35 besteht, wobei auf der gegenüberliegenden Seite das Kratzblech 21 einen Überlappungsrücksprung 36 zum Eingriff des Überlappungsvorsprunges 35 des nachfolgend anschließenden Kratzbleches 21 angeordnet ist. Hierbei können Überlappungsvorsprung 35 und Überlappungsrücksprung 36 jeweils eine von der in der Zeichnung dargestellten rechteckigen Form unterschiedliche Formgebung aufweisen, beispielseise eine spitzwinklige, eine wellenförmige oder eine pfeilförmige Kontur, wobei Überlappungsvorsprung und Überlappungsrücksprung jeweils korrespondierend zueinander ausgebildet sind.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Kettenkratzerförderer bestehend aus einer Vielzahl von hintereinander angeordneten, im Querschnitt U-förmig mit einem Boden (11) und zwei davon aufstehenden Seitenwänden (12) ausgebildeten Rinnensegmenten (10) und aus in die Rinnensegmente (10) jeweils eingesetzten Fördererschüssen, die jeweils baukastenartig aus vier leistenartig mit einer einheitlichen Gestalt ausgebildeten, längs der Seitenwände (12) eines Rinnensegments (10) verlaufenden und zwei übereinander liegende Führungskanäle (16) ausbildenden Profilteilen (14, 15) und aus einem diese derart verbindenden Kratzblech (21) bestehen, dass oberhalb und unterhalb des Kratzblechs (21) jeweils ein Obertrum und ein Untertrum für quer zur Laufrichtung angeordnete Kratzleisten und diese in Laufrichtung verbindende Fördererketten gebildet ist, wobei zwei untere auf dem Boden (11) der Rinnensegmente (10) aufliegende Profilteile (14) das Kratzblech (21) tragen und zwei obere Profilteile (15) auf das Kratzblech (21) aufgelegt sind, so dass das Kratzblech (21) zwischen den oberen und den unteren Profilteilen (14, 15) fixiert ist, und wobei in den Seitenwänden (12) der Rinnensegmente (10) jeweils die oberen Profilteile (15) niederhaltende Halter (28) festgelegt sind, **dadurch gekennzeichnet, dass** die als Gussteile ausgebildeten Profilteile (14, 15) jeweils an ihren den Führungskanal (16) zwischen sich einschließenden oberen (17) und unteren (18) Stegen angegossene Ansätze (25) aufweisen und in dem Boden (11) der Rinnensegmente (10) jeweils Ausnehmungen (26) zur Aufnahme der an den unteren Stegen (18) der auf den Boden (11) aufgesetzten Profilteile (14) befindlichen Ansätze (25) ausgebildet sind und die an den gegenüberliegenden oberen Stegen (17) der Profilteile (14) befindlichen Ansätze (25) in zugeordnete, in dem auf die Profilteile (14) aufgelegten Kratzblech (21) ausgebildete Ausnehmungen (27) eingreifen und dadurch das Kratzblech (21) zwischen den übereinander liegenden Profilteilen (14, 15) festlegen, und dass die auf das Kratzblech (21) gegenüber den Profilteilen (14) um 180 Grad gewendet aufgelegten Profilteile (15) mit den an ihren den unteren Profilteilen (14) zugewandten Stegen (17) ausgebildeten Ansätzen (25) in die in dem Kratzblech (21) angeordneten Ausnehmungen (27) eingreifen und mit ihren an den gegenüberliegenden oberen Stegen (18) ausgebildeten Ansätzen (25) von an den Seitenwänden (12) der Rinnensegmente (10) lösbar festgelegten Haltern (28) mittels Eingriff in in den Haltern (28) ausgebildete Ausnehmungen (30) übergriffen sind.

2. Kettenkratzerförderer nach Anspruch 1, **dadurch gekennzeichnet, dass** zur Stützung des Kratzbleches (21) in dem Rinnensegment (10) ein gesondertes Tragblech (20) vorgesehen und mit an ihm ausgebildeten Ausnehmungen (27) auf die Ansätze (25) der auf den Boden (11) der Rinnensegmente (10) aufgelegten Profilteile (14) aufgelegt ist und das Kratzblech (21) seinerseits von dem an den unteren Profilteilen (14) fixierten Tragblech (10) getragen ist.

3. Kettenkratzerförderer nach Anspruch 1 oder 2, dadurch gekennzeichnest, dass jeder Halter (28) zu seiner Festlegung an der Seitenwand (12) des Rinnensegmentes (10) mit einem Vorsprung (31) eine in der Seitenwand (12) ausgebildete Durchbrechung (33) durchgreift und in dem über die Seitenwand (12) hervorstehenden Bereich des Vorsprungs (31) eine Öffnung (32) zur Aufnahme eines einsteckbaren Sicherungskeils (34) ausgebildet ist.

4. Kettenkratzerförderer nach einem der Ansprüche 1 bis 3, **dadurch gekennzeichnet, dass** das Kratzblech (21) an seinen zwischen den Seitenwänden (12) des Rinnensegments (10) ausgerichteten Querkanten einerseits mit einem über das zugeordnete Rinnensegment (10) hervorstehenden Überlappungsvorsprung (35) und andererseits mit einem zum Eingriff des an dem in dem nachfolgenden Rinnensegment (10) fixierten Kratzblech (21) befindlichen Überlappungsvorsprunges (35) vorgesehenen Überlappungsrücksprung (36) versehen ist.

## Claims

1. A scraper chain conveyor, consisting of a plurality of trough segments (10) which are arranged one behind the other and are U-shaped in cross-section and have a bottom (11) and side walls (12) protruding upwards therefrom, and of conveyor strakes which are inserted in each case into the trough segments (10) and each of which consists in a modular manner of profiled parts (14, 15) which are formed in a rail-like manner with uniform shapes and extend along the side walls (12) of a trough segment (10) thereby forming two guide channels (16) that are arranged one above the other, and of a scraper plate (21) that connects the profiled parts in such a manner that above and below the scraper plate (21) in each case an upper run and a lower run is formed for scraper rods which are arranged transverse to the conveying direction and for conveyor chains that connect the scraper rods in the conveying direction, wherein two lower profiled parts (14) that rest on the bottom (11) of the trough segments (10) carry the scraper plate (21), and two upper profiled parts (15) are placed onto the scraper plate (21) so that the scraper plate (21) is fixed between the upper and the lower profiled parts (14, 15), and wherein holders (28) are secured in the side walls (12) of the trough segments (10), each of which holders holds down the upper profiled parts (15), **characterized in that** the profiled parts (14, 15) that are formed as cast parts have cast-on projections (25) on each of their upper (17) and lower (18) webs which enclose the guide channel (16) between them, and recesses (26) for receiving the projections (25) located on the lower webs (18) of the profiled parts (14) placed onto the bottom (11) of the trough segments (10) are formed in the bottom (11) of each of the trough segments (10), and the projections (25) located on the opposing upper webs (17) of the profiled parts (14) engage in associated recesses (27) that are formed in the scraper plate (21) that is placed onto the profiled parts (14) and thereby secure the scraper plate (21) between the profiled parts (14, 15) that are arranged one above the other, and that the profiled parts (15), which are turned by 180 degrees with respect to the profiled parts (14) and are placed onto the scraper plate (21), engage with their projections (25) formed on webs (17), which webs face towards the lower profiled parts (14), in the recesses (27) arranged in the scraper plate (21), and with their projections (25) formed on the opposing upper webs (18), they are overlapped by holders (28), which are detachably secured on the side walls (12) of the trough segments (10), by means of engagement in recesses (30) formed in the holder (28).

2. The scraper chain conveyor according to claim 1, **characterized in that** for supporting the scraper plate (21), a separate support plate (20) is provided in the trough segment (10), and said support plate, with recesses (27) formed thereon, is placed onto the projections (25) of the profiled parts (14) that are placed onto the bottom (11) of the trough segments (10), and the scraper plate (21), for its part, is supported by the support plate (20) fixed to the lower profiled parts (14).

3. The scraper chain conveyor according to claim 1 or claim 2, **characterized in that** each holder (28), for securing the holder at the side wall (12) of the trough segments (10), extends with a protrusion (31) through an through-hole (33) formed in the side wall (12), and an opening (32) for receiving an insertable locking key (34) is formed in the protrusion (31) protruding beyond the side wall (12).

4. The scraper chain conveyor according to any one of the claims 1 to 3, **characterized in that** the scraper plate (21), on its transverse edges aligned between the side walls (12) of the trough segments (10), is provided on one side with an overlap protrusion (35) protruding beyond the associated trough segment (10), and on the other side, it is provided with an overlap recess (36) which is provided for engaging with the overlap protrusion (35) located on the scraper plate (21) fixed in the subsequent trough segment (10).

## Revendications

1. Convoyeur à chaîne à raclettes se composant d'une pluralité de segments de rigole (10) disposés les uns derrière les autres, réalisés en section en forme de U avec un fond (11) et deux parois latérales (12) se dressant depuis celui-ci, et d'éléments de convoyeur insérés respectivement dans les segments de rigole (10), qui se composent respectivement de manière modulaire de quatre parties profilées (14, 15) réalisées comme une barre avec une forme homogène, s'étendant le long des parois latérales (12) d'un segment de rigole (10) et réalisant deux canaux de guidage (16) se trouvant l'un au-dessus de l'autre, et d'une tôle formant raclette (21) les reliant de telle manière qu'au-dessus et au-dessous de la tôle formant raclette (21), respectivement un brin supérieur et un brin inférieur soient formés pour des barres de raclette disposées transversalement au sens de la marche et des chaînes de convoyeur les reliant dans le sens de la marche, deux parties profilées (14) inférieures reposant sur le fond (11) des segments de rigole (10) portant la tôle formant raclette (21) et deux parties profilées (15) supérieures étant placées sur la tôle formant raclette (21) de sorte que la tôle formant raclette (21) soit fixée entre les parties profilés supérieures et inférléures (14, 15), et des supports (28) retenant respectivement les parties profilées (15) supérieures étant fixés dans les parois latérales (12) des segments de rigole (10), **caractérisé en ce que** les parties profilées (14, 15) réalisées comme des parties moulées présentent respectivement sur leurs nervures supérieures (17) et inférieures (18) renfermant entre elles le canal de guidage (16) des saillies (25) coulées et dans le fond (11) des segments de rigole (10), respectivement des évidements (26) sont réalisés pour le logement des saillies (25) se trouvant sur les nervures inférieures (18) des parties profilées (14) placées sur le fond (11) et les saillies (25) se trouvant sur les nervures (17) supérieures opposées des parties profilées (14) s'engagent dans des évidements (27) associés réalisés dans la tôle formant raclette (21) placée sur les parties profilées (14) et flxent par là même la tôle formant raclette (21) entre les parties profilées (14, 15) se trouvant l'une au-dessus de l'autre, et **en ce que** les parties profilées (15) placées tournées de 180 degrés par rapport aux parties profilées (14) sur la tôle formant raclette (21) s'engagent avec les saillies (25) réalisées sur leurs nervures (17) tournées vers les parties profilées (14) inférieures dans les évidements (27) disposés dans la tôle formant raclette (21) et sont recouvertes avec leurs saillies (25) réalisées sur les nervures (18) supérieures opposées par des supports (28) fixés de manière amovible sur les parois latérales (12) des segments de rigole (10) par engagement dans des évidements (30) réalisés dans les supports (28).

2. Convoyeur à chaîne à raclettes selon la revendication 1, **caractérisé en ce qu'**une tôle porteuse particulière (20) est prévue pour l'appui de la tôle formant raclette (21) dans le segment dé rigole (10) et est placée avec des évidements (27) réalisés sur elle sur les saillies (25) des parties profilées (14) placées sur le fond (11) des segments de rigole (10) et la tôle formant raclette (21) est portée de son côté par la tôle porteuse (10) fixée sur les parties profilées (14) inférieures.

3. Convoyeur à chaîne à raclettes selon la revendication 1 ou 2, **caractérisé en ce que** chaque support (28) traverse pour sa fixation sur la paroi latérale (12) du segment de rigole (10) avec une saillie (31) un perçage (33) réalisé dans la paroi latérale (12) et une ouverture (32) est réalisée dans la zone de la saillie (31) dépassant de la paroi latérale (12) pour la réception d'une goupille d'arrêt (34) emboîtable.

4. Convoyeur à chaîne à raclettes selon l'une quelconque des revendications 1 à 3, **caractérisé en ce que** la tôle formant raclette (21) est pourvue sur ses arêtes transversales orientées entre les parois latérales (12) du segment de rigole (10) d'une part d'une saillie de chevauchement (35) dépassant du segment de rigole (10) associé et d'autre part d'un renfoncement de chevauchement (36) prévu pour l'engagement de la saillie de chevauchement (35) se trouvant sur la tôle formant raclette (21) fixée dans le segment de rigole (10) suivant.
